# EUROPÄISCHE PATENTANMELDUNG

(11) **EP 4 152 739 A1**
(43) Veröffentlichungstag der Anmeldung: **22.03.2023**
(21) Anmeldenummer: 21197022.3
(22) Anmeldetag: 16.09.2021
(51) Int. Cl.: H04N 5/232, G03B 15/00

(54) **VERFAHREN ZUR ERFASSUNG VON BILDAUFNAHMEN, SYSTEM, FAHRZEUG, COMPUTERPROGRAMMPRODUKT UND COMPUTERLESBARES MEDIUM**

(71) Anmelder: Siemens Energy Global GmbH & Co. KG, 81739 München (DE)
(72) Erfinder: Schöberl, Michael, 91097 Oberreichenbach (DE)

(57) **Zusammenfassung**

Die Erfindung betrifft ein Verfahren zur Erfassung von Bildaufnahmen von einem oder mehreren Objekten (5) mittels eines in oder an einem Fahrzeug (1), insbesondere Luftfahrzeug, angeordneten Kamerasystems (2), wobei das Kamerasystem (2) über eine Dämpfungseinrichtung (4), welche bevorzugt zur passiven Dämpfung von Schwingungsbewegungen des Kamerasystems (2) ausgebildet ist, an dem Fahrzeug (2) gehalten ist, und wobei das Kamerasystem (2) infolge des Antriebs und insbesondere der Fortbewegung des Fahrzeugs Schwingungsbewegungen ausführt, bei dem
- an wenigstens einem Zeitpunkt wenigstens eine Schwingungsbewegung des Kamerasystems (2) relativ zu dem Fahrzeug (1) direkt oder indirekt ermittelt wird (S1), und
- wenigstens eine Triggerung des Kamerasystems (2) in Abhängigkeit der an dem wenigstens einen Zeitpunkt ermittelten wenigstens einen Schwingungsbewegung erfolgt (S2).

Darüber hinaus betrifft die Erfindung ein System (8) zur Durchführung eines solchen Verfahrens, ein Fahrzeug (1), ein Computerprogrammprodukt und ein computerlesbares Medium.

## Beschreibung

Die Erfindung betrifft ein Verfahren zur Erfassung von Bildaufnahmen mittels eines in einem Fahrzeug, insbesondere Luftfahrzeug, angeordneten Kamerasystems. Darüber hinaus betrifft die Erfindung ein System zur Durchführung eines solchen Verfahrens, ein Fahrzeug, ein Computerprogrammprodukt und ein computerlesbares Medium.

Der Anmelderin sind Verfahren bekannt, bei denen Bildaufnahmen mit einem Kamerasystem aus einem angetriebenen, sich insbesondere fortbewegenden Fahrzeug gemacht werden. Rein beispielhaft hierfür sei ein Service zur Inspektion einer Hochspannungs-Freileitungs-Infrastruktur genannt, bei dem die Infrastruktur, einschließlich Leitungen dieser, mit einem Hubschrauber, an bzw. in dem ein Kamerasystem angeordnet ist, beflogen werden. Bilder, die im Rahmen des Inspektionsfluges mit dem Kamerasystem gemacht wurden, werden anschließend bevorzugt automatisch ausgewertet.

Dabei steht der Wunsch einer möglichst schnellen Befliegung und damit möglichst geringen Kosten dem Wunsch nach einer besonders hohen Auflösung und einer erforderlichen bzw. ausreichenden Lichtmenge entgegen. Die Auflösung unterliegt u.a. Einschränkungen durch Bewegungsunschärfe aufgrund der Tatsache, dass sich das Kamerasystem während der Bilderfassung relativ zu den aufgezeichneten Objekten bewegt, und eine ausreichende Lichtmenge setzt eine ausreichend hohe Belichtungszeit voraus.

Bei einer Fluggeschwindigkeit von beispielsweise 25 km/h bewegen sich aufzunehmende Objekte, an denen das Luftfahrzeug vorbeifliegt, bereits mit etwa 7 Millimetern pro Millisekunde relativ zum Luftfahrzeug bzw. umgekehrt. Typischer Weise ist jedoch eine Belichtungszeit von mehr als einer Millisekunde erforderlich, um ausreichend helle Bilder aufnehmen zu können. Eine Ortsauflösung am Objekt von 2 bis 3 Millimetern kann jedoch nicht mehr unterschritten werden, da jedes reale Objekt eine Verschmierung durch Bewegung von bereits mehr als 2 Pixeln aufweist. Auch gibt es Kamerasysteme, die in der effektiven Belichtungszeit nicht einstellbar sind und z.B. mit 10 Millisekunden Belichtungszeit arbeiten. Rein beispielhaft hierfür seien Mikrobolometer Thermalkameras genannt. Hier wird eine Region im Objektraum von 69 Millimetern auf einem Bildpunkt zusammengefasst.

Für eine geeignete Analyse aufgezeichneter Bilder sind in der Regel Ortsauflösungen von weniger als 10 Millimetern gewünscht. Mit den genannten, der Anmelderin bekannten Flugprofilen ist diese Auflösung nicht erreichbar.

Es wäre denkbar, die Fluggeschwindigkeit grundsätzlich zu reduzieren. Hierdurch würden sich die Kosten jedoch stark erhöhen. Mit der Halbierung der Fluggeschwindigkeit wäre beispielsweise wäre etwa eine Verdopplung der Kosten verbunden. Flugminuten und Personalkosten sind die größten Posten in der Inspektion.

Es wäre auch denkbar, nur an interessanten Objekten langsam zu fliegen. Dazu müsste man jedoch vorab bzw. im Flug alle Objekte von besondere Interesse kennen, was in der Regel nicht der Fall ist, und ständig langsamer und wieder schneller fliegen. Solche Flugprofile sind für den Piloten und die Inspektoren im Flug unangenehm. Weiterhin existieren konstruktiv sowie regelungstechnisch aufwendige, stark motorisierte Systeme, die ein Nachführen des Kamerasystems mittels einer aktiven, motorisierten Nachführeinrichtung ermöglichen. Diese werden auch als aktive Gimbals bezeichnet. Das Kamerasystem bzw. die Kameras sind dabei beweglich aufgehängt und motorisch verfahrbar. Eine große Herausforderung ist unter anderem damit verbunden, dass kontinuierlich erkannt werden muss, auf welche Ziele nachzuführen ist, was nicht immer fehlerfrei gelingt. Mit solchen Systemen sind ferner zusätzliches Gewicht und hohe Kosten verbunden.

Aus dem Bereich der Astronomie ist ein "Lucky Imaging"-Verfahren bekannt, das viele auch unscharfe Bilder aufnimmt und in der nachträglichen Analyse der Bildinhalte unscharfe Bilder verwirft. Durch den hohen nachträglichen Analyseaufwand und den hohen Speicherplatzbedarf ist dieses Verfahren jedoch in der Inspektion nicht einsetzbar.

Eine Option zur Auflösungserhöhung ist ferner durch die Verarbeitung der Bilddaten im Nachgang zur Entfernung der Bewegungsunschärfe gegeben. Auch dies führt jedoch zu Nachteilen. Verfahren zur Entfaltung erhöhen das Bildrauschen. Verfahren, die trainingsbasiert eine superresolution oder Auflösungserhöhung durchführen "erfinden" neue Bildinhalte. Für eine verlässliche Inspektion beispielsweise sind auf diesem Wege gewonnene bzw. bearbeitet Bilddaten nicht mehr zu gebrauchen.

Ausgehend hiervon ist es daher eine Aufgabe der vorliegenden Erfindung, ein Verfahren zur Erfassung von Bildaufnahmen aus einem bewegten Fahrzeug anzugeben, welches bei vergleichsweise hohen Fahrzeuggeschwindigkeiten und vergleichsweise niedrigen Kosten Bilder mit einer guten Auflösung liefert.

Diese Aufgabe wird gelöst durch ein Verfahren zur Erfassung von Bildaufnahmen von einem oder mehreren Objekten mittels eines in oder an einem Fahrzeug, insbesondere Luftfahrzeug, angeordneten Kamerasystems, wobei das Kamerasystem über eine Dämpfungseinrichtung, welche bevorzugt zur passiven Dämpfung von Schwingungsbewegungen des Kamerasystems ausgebildet ist, in oder an dem Fahrzeug gehalten ist, und wobei das Kamerasystem infolge des Antriebs und insbesondere der Fortbewegung des Fahrzeugs Schwingungsbewegungen ausführt, bei dem
- an wenigstens einem Zeitpunkt wenigstens eine Schwingungsbewegung des Kamerasystems relativ zu dem Fahrzeug direkt oder indirekt ermittelt wird, und
- wenigstens eine Triggerung des Kamerasystems in Abhängigkeit der an dem wenigstens einen Zeitpunkt ermittelten wenigstens einen Schwingungsbewegung erfolgt.

Die Erfindung basiert mit anderen Worten auf der Grundidee, die vorhandene schwingungsdämpfende Aufhängung des Kamerasystems und insbesondere natürliche Schwingungen auszunutzen und das Kamerasystem gezielt zu einem günstigen Zeitpunkt bzw. zu günstigen Zeitpunkten zu triggern, mit anderen Worten auszulösen. Mit der Erfindung wird dabei sowohl gegen Vibrationen des Fahrzeugs, beispielsweise Luftfahrzeugs, als auch gegen die Bewegungsunschärfe gearbeitet.

Insbesondere für den Fall, dass man sich eine Schwingung als Sinusschwingung oder sinusartige Schwingung vorstellt, wird deutlich, dass Zeitpunkte vorliegen, in denen sich das Kamerasystem mit der Objektbewegung bewegt, im Falle einer Drehschwingung z.B. mit der Objektbewegung verdreht, und ein zu betrachtendes bzw. aufzuzeichnendes Objekt verfolgt, und Zeitpunkte, in denen das Kamerasystem die scheinbare Bewegung vor dem Objektiv verstärkt. In Übergängen ist das Kamerasystem ausgelenkt und besitzt keine Schwing-, insbesondere Drehrate. Bei einem dämpfend aufgehängten, während der Fahrt bzw. während des Fluges schwingenden Kamerasystem liegen somit Zeitpunkte vor, an denen ein negativer Einfluss des Antriebs bzw. der Bewegung des Fahrzeugs auf die Bildqualität durch die Schwingung des Kamerasystems reduziert bzw. minimiert, im optimalen Falle sogar vollständig aufgehoben wird. Die Schwingungen können bzw. der Zeitpunkt der Schwingungen kann ausgenutzt werden, um im richtigen Zeitpunkt der Objektverfolgung Bildaufnahmen (Auslöse- bzw. Triggerzeitpunkt) durchzuführen. Beispielsweise kann eine momentane Schwingungsbewegung, die einer Vorwärtsbewegung des Fahrzeugs entgegengerichtet ist, Letztere, und somit die Relativbewegung zwischen Fahrzeug und Objekt(en), reduzieren und somit - teilweise oder auch vollständig - kompensieren.

Das erfindungsgemäß erkannte Kompensationspotential der Schwingung(en) wird gezielt ausgenutzt, um bessere Bilder zu erhalten. Dabei ist es nicht nötig, die Geschwindigkeit, mit der sich das das Kamerasystem tragende Fahrzeug fortbewegt, zu verringern. Ein damit verbundener zusätzlicher Zeitaufwand und Mehrkosten können daher vollständig vermieden werden. Auch ein gezieltes schneller und langsamer fahren bzw. fliegen, was sehr unkomfortabel fürden bzw. die Inspektoren im Fahrzeug sein kann, ist nicht erforderlich.

Im Ergebnis können auf die erfindungsgemäße Weise besonders hochwertige, insbesondere hochaufgelöste, scharfe Aufnahmen mit moderatem Zeitaufwand, zu moderarten Kosten und gleichzeitig ohne negative Effekte für Inspektoren erhalten werden.

Ein Kamerasystem, welches im Rahmen des erfindungsgemäßen Verfahrens genutzt wird, kann eine oder mehrere Kameras umfassen oder durch eine der mehrere Kameras gegeben sein. Bei der oder den Kameras kann es sich beispielsweise um Photo- und/oder Videokameras handeln. Selbstverständlich ist es möglich, dass mehr als ein Kamerasystem in oder an einem Fahrzeug gehalten ist. Dann kann für nur eines oder auch mehrere bzw. alle Kamerasysteme auf die erfindungsgemäße Weise getriggert werden. Das Kamerasystem kann zum Beispiel in einem Luftfahrzeug angeordnet sein, so dass Flugaufnahmen erstellt werden können.

Die Dämpfungseinrichtung kann beispielsweise einen oder mehrere Drahtseildämpfer und/oder einen oder mehrere Gummipuffer umfassen. Sie kann zwei Montageplatten aufweisen, die über Stahlseile und/oder Gummipuffer miteinander dämpfend gekoppelt sind und von welchen eine dazu dient, ein Kamerasystem oder eine Kamera eines solchen zu tragen und die andere in bzw. an dem Fahrzeug befestigt zu werden, etwa auf einem Boden des Fahrzeugs. Eine Dämpfungseinrichtung kann auch mehrere Paare von dämpfend gekoppelten Platten umfassen, dies insbesondere, wenn sie zusammen mit einem Kamerasystem mit mehr als einer Kamera genutzt werden soll. Da das Kamerasystem über eine Schwingungsdämpfung mit dem Fahrzeug verbunden ist, bewegt es sich ebenso in Flugrichtung und hat insbesondere auch leichte Schwingungen einschließlich Vibrationen, die sich in Bewegung in allen Freiheitsgraden äußern können.

Unter Triggerung ist in an sich bekannter Weise zu verstehen, dass das bzw. das jeweilige Kamerasystem ausgelöst also ein Bild oder auch eine Bildsequenz mit diesem aufgenommen wird. Es kann insbesondere ein Befehl an das bzw. das jeweilige Kamerasystem ausgegeben werden, welcher das Auslösen zur Folge hat.

Es kann sein, dass das Kamerasystem wenigstens eine Drehschwingung und/oder wenigstens eine translatorische Schwingung ausführt. Im Gegensatz zur translatorischen Schwingung findet bei der Drehschwingung eine Schwingung um einen rotatorischen Freiheitsgrad statt. Das Kamerasystem dreht sich um eine Achse schwingend vor und zurück, z.B. eine zumindest im Wesentlichen vertikal orientierte Achse, die beispielsweise zentral durch das Kamerasystem verlaufen kann.

Das Kamerasystem kann zum Beispiel wenigstens eine Drehschwingung um eine Achse ausführen, die nicht parallel, insbesondere orthogonal zu einer Richtung orientiert ist, in welcher sich das Fahrzeug vorwärts bewegt. Ist dies der Fall, wird bevorzugt an wenigstens einem Zeitpunkt zumindest diese Drehschwingung des Kamerasystems direkt oder indirekt ermittelt.

Weiterhin kann es sein, dass das Kamerasystem eine sinusartige bzw. sinusförmige Schwingung, bevorzugt eine sinusartige bzw. sinusförmige Drehschwingung, ausführt.

Auch ist es möglich, dass eine von dem Kamerasystem ausgeführte Schwingungsbewegung als sinusartige bzw. sinusförmige Schwingung, insbesondere sinusartige bzw. sinusförmige Drehschwingung, angenommen bzw. angenähert wird. Z.B. wenn der Schwingungsverlauf bzw. die Schwingungsform unbekannt ist, kann eine solche Schätzung bzw. Näherung in Frage kommen und dennoch für kurzfristige Vorhersagen ausreichend gute Resultate liefern.

Dass eine Schwingungsbewegung des Kamerasystems ermittelt wird, bedeutet insbesondere, dass wenigstens ein zu einer Schwingungsbewegung des Kamerasystems gehöriger oder eine Schwingungsbewegung des Kamerasystems repräsentierender bzw. charakterisierender Parameter direkt oder indirekt ermittelt wird. Ein solcher Parameter kann auch als Schwingungsparameter bezeichnet werden.

Rein beispielhaft für Schwingungsparameter seien eine Phasenlage, eine Frequenz und/oder eine Winkelgeschwindigkeit einer Schwingungsbewegung des Kamerasystems genannt.

Es sei betont, dass im Rahmen des erfindungsgemäßen Verfahrens eine vollständige bzw. vollumfassende Charakterisierung des jeweiligen momentanen Schwingungszustandes des Kamerasystems erfolgen kann, diese jedoch nicht zwingend erforderlich ist. So ist es beispielsweise möglich, dass ein Kamerasystem Schwingungsbewegungen in mehrere unterschiedliche Richtungen und/oder Schwingungsbewegungen mehrerer unterschiedlicher Art, z.B. translatorische und/oder rotatorische Schwingungen, ausführt. In einem solchen Fall kann es bereits ausreichen, wenn beispielsweise ein Schwingungsparameter einer Schwingungsbewegung in nur einer Richtung und/oder nur einer Art ermittelt wird, z.B. eine Drehschwingung in einer Richtung über eine zugehörige Winkelgeschwindigkeit. Auch kann im Falle von Schwingungsbewegungen in mehreren Richtungen und/oder mehrere Arten nur auf einige der Richtungen und/oder Arten abgestellt werden.

Die Ermittlung wenigstens eines Schwingungsparameters der oder der jeweiligen Schwingungsbewegung kann beispielsweise durch messtechnische Erfassung erfolgen bzw. eine solche einschließen. Wird z.B. eine Winkelgeschwindigkeit einer Schwingung des Kamerasystems direkt mittels eines geeigneten Sensors messtechnisch erfasst, liegt ein Beispiel für eine direkte Ermittlung eines Schwingungsparameters vor.

Auch ist es möglich, dass einer oder mehrere Schwingungsparameter einer oder mehrerer Schwingungsbewegungen von einem oder mehreren anderen Parametern abgeleitet, insbesondere auf Basis einer oder mehrerer anderer Parameter berechnet und/oder geschätzt und/oder vorhergesagt werden. Rein beispielhaft sei genannt, dass auf Basis der Drehbewegung eines Rotors eines Hubschraubers als Fahrzeug oder auf Basis wenigstens eines anderen Antriebsparameters, ggf. auch einer anderen Fahrzeugart, wenigstens eine Schwingungsbewegung bzw. wenigstens ein zugehöriger insbesondere dominanter Schwingungsparameter abgeleitet, insbesondere berechnet und/oder geschätzt und/oder vorhergesagt wird. Eine Ableitung eines oder mehrerer Schwingungsparameter von einem oder mehreren anderen Parametern wäre ein Beispiel für eine indirekte Ermittlung.

In der Regel wird es so sein, dass an mehreren hintereinanderliegenden Zeitpunkten eine Schwingungsbewegung des Kamerasystems relativ zu dem Fahrzeug direkt oder indirekt ermittelt wird. Dann können mehrere Triggerungen des Kamerasystems in Abhängigkeit der an den mehreren hintereinanderliegenden Zeitpunkten ermittelten wenigstens einen Schwingungsbewegung erfolgen.

Beispielsweise kann jeweils eine Triggerung in Abhängigkeit der ermittelten Schwingungsbewegung oder Schwingungsbewegungen erfolgen.

Auch kann während des Dauer einer Inspektionsfahrt bzw. eines Inspektionsfluges wiederholt, z.B. zu zeitlich bevorzugt äquidistant beabstandeten Ermittlungszeitpunkten, eine Ermittlung der Schwingungsbewegung(en) und jeweils nach einer oder auch mehreren Ermittlungen eine zugehörige bzw. nachfolgende Triggerung erfolgen.

Im Falle, dass zum Berechnungszeitpunkt eine Aufnahme ungünstig wäre, ist es auch möglich, keinen Triggerzeitpunkt zu berechnen bzw. festzulegen bzw. keine Triggerung zu veranlassen, sondern eine weitere Berechnung kurze Zeit später unter Einbeziehung weiterer Messwerte erneut durchzuführen.

Entsprechend kann vorgesehen sein, dass an mehreren Zeitpunkten wenigstens eine Schwingungsbewegung des Kamerasystems relativ zu dem Fahrzeug direkt oder indirekt ermittelt wird und erst nach zwei oder mehr Zeitpunkten bzw. Ermittlungen eine Triggerung in Abhängigkeit der ermittelten Schwingungsbewegung oder Schwingungsbewegungen erfolgt, bevorzugt erst, wenn die Ermittlung für wenigstens einen Zeitpunkt ergeben hat, dass ein günstiger Zeitpunkt für eine Bildaufnahme vorliegt.

Ebenso denkbar ist es, den Zeitpunkt der nächsten Aufnahme aus der gewünschte mittlere Bildwiederholrate abzuwarten und dann erst einmalig einen neuen Triggerzeitpunkt zu bestimmen.

Eine weitere Ausführungsform zeichnet sich dadurch aus, dass an mehreren hintereinanderliegenden Zeitpunkten wenigstens eine Schwingungsbewegung des Kamerasystems relativ zu dem Fahrzeug direkt oder indirekt ermittelt, beispielsweise jeweils wenigstens ein zugehöriger Schwingungsparameter gemessen wird, und eine zugehörige Fitfunktion ermittelt wird. Die mehreren Zeitpunkte können in einem (jeweiligen) zurückliegenden Betrachtungszeitraum liegen, der sich beispielswiese auf die (jeweils) vorangegangene Sekunde oder mehrere (jeweils) vorangegangene Sekunden erstrecken kann. Es können Fitfunktionen für mehrere insbesondere hintereinanderliegende Betrachtungszeiträume ermittelt werden.

Weiter bevorzugt kann gelten, dass wenigstens eine Triggerung des Kamerasystems unter Berücksichtigung bzw. in Abhängigkeit von der ermittelten Fitfunktion erfolgt. Beispielsweise können aus einer Fitfunktion Amplitude und/oder Frequenz und/oder Phasenlage der Schwingungsbewegung(en) ermittelt werden. Als Fitfunktion können beispielsweise eine oder mehrere Sinusfunktionen verwendet werden, was sich als besonders geeignet erweisen hat.

Es ist auch möglich, dass unter Berücksichtigung bzw. in Abhängigkeit von der ermittelten Fitfunktion wenigstens ein optimaler Aufnahmezeitpunkt für eine Bildaufnahme abgeleitet wird und an diesem eine Triggerung des Kamerasystems erfolgt. Auch ist es möglich, dass unter Berücksichtigung bzw. in Abhängigkeit von der ermittelten Fitfunktion mehrere zukünftige optimale Aufnahmezeitpunkte ermittelt werden und an diesen jeweils eine Triggerung erfolgt.

Eine weitere Ausführungsform zeichnet sich dadurch aus, dass wenigstens eine optimale Schwingungs-, beispielsweise Drehschwingungsbewegung unter Berücksichtigung einer gemessenen oder vorgegebenen Fluggeschwindigkeit und/oder eines gemessenen oder vorgegebenen Objektabstandes und/oder wenigstens einer Kameraeinstellung, bevorzugt der Brennweite und/oder dem Blickwinkel und/oder der Zielauflösung, bestimmt, beispielsweise berechnet wird.

Dann kann beispielsweise geprüft werden, ob bzw. wann die für einen oder mehrere Zeitpunkte ermittelte wenigstens eine Schwingungsbewegung des Kamerasystems relativ zu dem Fahrzeug mit der optimalen Schwingungsbewegung zumindest in etwa übereinstimmt. Wenn für einen oder mehrere der betrachteten Zeitpunkte eine solche Übereinstimmung vorliegt, kann dann (jeweils) eine Triggerung erfolgen.

Für den Fall, dass eine Fitfunktion bestimmt wurde, kann auch ermittelt werden, welche Punkte auf der Fitfunktion einer optimalen Schwingungsbewegung entsprechen und an diesen Zeitpunkten kann dann eine Triggerung des Kamerasystems erfolgen.

Als besonders geeignet hat es sich erwiesen, wenn die oder wenigstens eine Triggerung des Kamerasystems erfolgt, wenn die wenigstens eine ermittelte Schwingungsbewegung eine Bewegung, insbesondere Vorwärtsbewegung, des Fahrzeugs relativ zu wenigsten einem bevorzugt ruhenden Objekt, von dem eine oder mehrere Aufnahmen zu machen sind, zumindest teilweise kompensiert. Ein Kompensieren ist insbesondere dann möglich, wenn die Schwingungsbewegung zu dem Zeitpunkt der Vorwärtsbewegung entgegengerichtet ist oder zumindest eine entgegen gerichtete Komponente aufweist. Dann verfolgt die Kamera aufgrund der momentanen Schwingungssituation das Objekt bzw. die Objekte praktisch entgegen der Bewegung des Fahrzeugs, etwa Vorwärtsbewegung.

Auch kann vorgesehen sein, dass die oder wenigstens eine Triggerung des Kamerasystems erfolgt, wenn die wenigstens eine ermittelte Schwingungsbewegung eine Bewegung, insbesondere Vorwärtsbewegung, des Fahrzeugs relativ zu wenigsten einem bevorzugt ruhenden Objekt, von dem eine oder mehrere Aufnahmen zu machen sind, derart zumindest teilweise kompensiert, dass das resultierende Bild oder die resultierenden Bilder sich durch eine höhere Schärfe und/oder Auflösung auszeichnen, als es der Fall wäre, wenn das Kamerasystem keine Schwingungsbewegung relativ zu dem Fahrzeug ausgeführt hätte.

Vor allem, wenn man sich die oder wenigstens eine Schwingungsbewegung des Kamerasystems als Sinusschwingung oder sinusartige Schwingung vorstellt, wird klar, dass an Zeitpunkten, in denen das Kamerasystem ein betrachtetes Objekt aufgrund der momentanen Schwingung verfolgt, der negative Einfluss der Fahrzeugbewegung durch die Schwingung reduziert bzw. minimiert, im optimalen Falle sogar vollständig aufgehoben wird und somit eine bessere Auflösung erzielt werden kann, ohne dass die Geschwindigkeit des das Kamerasystem tragenden Fahrzeugs hierfür reduziert werden müsste. Eine Triggerung des Kamerasystems erfolgt zweckmäßiger Weise gezielt jeweils zu in dieser Hinsicht günstigen Zeitpunkten, insbesondere, wenn die wenigstens eine Schwingungsbewegung eine z.B. translatorische Bewegung des Fahrzeugs relativ zu dem oder den Objekten derart kompensiert, dass bessere, bevorzugt schärfere Aufnahmen erhalten werden. Insbesondere ein Zeitpunkt, zu dem eine solche Kompensation möglich ist, kann als günstiger Zeitpunkt für eine Triggerung und Bildaufnahme betrachtet werden. Ein Zeitpunkt, zu dem eine vollständige oder unter gegebenen Bedingungen größtmögliche Kompensation möglich ist, kann insbesondere als optimaler Zeitpunkt für eine Triggerung und Bildaufnahme betrachtet werden.

Wie angemerkt wird das Kamerasystem zweckmäßiger Weise mehrfach hintereinander getriggert, insbesondere über einen Aufnahmezeitraum hinweg, um eine Mehrzahl von Aufnahmen zu erhalten. Dann kann vorgesehen sein, dass ausschließlich getriggert wird, wenn die wenigstens eine ermittelte Schwingungsbewegung eine Bewegung, insbesondere Vorwärtsbewegung, des Fahrzeugs relativ zu wenigsten einem bevorzugt ruhenden Objekt, von dem eine oder mehrere Aufnahmen zu machen sind, zumindest teilweise kompensiert, bevorzugt derart, dass eine höhere Schärfe und/oder Auflösung erzielt wird.

Das Fahrzeug kann zu dem oder dem jeweiligen Triggerzeitpunkt des Kamerasystems eine Vorwärtsbewegung ausführen.

Für den Fall, dass sich das Fahrzeug fortbewegt und das Kamerasystem eine sinusförmige bzw. sinusartige Schwingungsbewegung ausführt, haben sich insbesondere diejenigen Zeitpunkte als geeignete Triggerzeitpunkte erwiesen, an denen die maximale Steigung des Sinus, mit anderen Worte die maximale Schwingungsgeschwindigkeit vorliegt und die Schwing- bzw. Drehrichtung zu der Bewegungsrichtung des Fahrzeugs entgegengerichtet ist. In bevorzugter Weiterbildung kann gelten, dass diese Zeitpunkte für die gegebene Bewegungssituation (translatorische Bewegung des Fahrzeugs) als optimale Aufnahmezeitpunkte für das Kamerasystem angenommen werden.

Die maximale Steigung des Sinus der Schwingung ist durch Dimensionierung der Schwingungsdämpfung und eine ggf. vorgesehene Anregung vorgegeben und resultiert dann bevorzugt in einer maximalen Fluggeschwindigkeit, bis zu der das Verfahren besonders gute Ergebnisse liefert. Mit anderen Worten kann von der Ausgestaltung bzw. Dimensionierung der Dämpfungseinrichtung auf eine maximale Fahrgeschwindigkeit des Fahrzeuges geschlossen werden, innerhalb derer die Erfindung besonders optimale Ergebnisse liefert. Andersherum ist es natürlich möglich, eine maximale Fahrgeschwindigkeit vorab festzulegen und in Abhängigkeit dieser gezielt eine entsprechend ausgestaltete bzw. dimensionierte Dämpfungseinrichtung zu verwenden.

Eine weitere Ausführungsform zeichnet sich dadurch aus, dass die oder wenigstens eine Triggerung des Kamerasystems erfolgt, wenn bezüglich zumindest eines Freiheitsgrades der wenigstens einen Schwingungsbewegung des Kamerasystems gilt, dass sich die Richtung der Schwingungsbewegung umkehrt. Dies hat sich als besonders geeignet erwiesen, wenn das Kamerasystem in einem Luftfahrzeug angeordnet ist und sich das Luftfahrzeug zu dem oder dem jeweiligen dieser Triggerzeitpunkte im Schwebeflug befindet. In einem Schwebeflug, wie er beispielsweise von einem Hubschrauber ausgeführt werden kann, führt das Luftfahrzeug keine oder nur eine geringe Vorwärtsbewegung gegenüber dem Untergrund aus. Dann ist es auch nicht erforderlich, eine Vorwärtsbewegung durch eine entgegen gerichtete Schwingungsbewegung zu kompensieren, sondern nur den Effekt durch Vibrationen abzumildern. Besonders gute Bedingung für eine Aufnahme liegen vor, wenn momentan keine Schwingungsbewegung erfolgt, wie es am Umkehrpunkt der beispielhaften Sinusschwingung der Fall ist. Bevorzugt gilt, dass diese Zeitpunkte für die gegebene Bewegungssituation (keine translatorische Bewegung des Fahrzeugs) als optimale Aufnahmezeitpunkte für das Kamerasystem angenommen werden.

Der günstigste bzw. optimale Zeitpunkt zur Triggerung ist damit auch von der Fahr-, insbesondere Fluggeschwindigkeit über Grund, abhängig, die heute üblicherweise über GNSS ermittelt wird.

Das erfindungsgemäße Verfahren kann in den unterschiedlichsten Bereichen Anwendung finden. Rein bespielhaft sei genannt, dass aus einem Luftfahrzeug Aufnahmen von Objekten, beispielsweise zu Inspektionszwecken oder dergleichen, aufzunehmen sind. Bei einem Luftfahrzeug, in bzw. an dem das Kamerasystem angeordnet ist, kann es sich z.B. um einen Hubschrauber oder ein Flugzeug oder eine Drohne handeln.

Auch gibt es viele Anwendungsfälle, die Aufnahmen aus nicht fliegenden Fahrzeugen, wie etwa Züge oder PKWs erfordern, für welche sich das erfindungsgemäße Verfahren ebenfalls hervorragend eignet.

In Weiterbildung kann vorgesehen sein, dass unter Durchführung des Verfahrens Bilder einer Hochspannungs- Freileitungs-Infrastruktur erfasst werden, insbesondere Bilder, die zur Inspektion der Hochspannungs- Freileitungs-Infrastruktur herangezogen werden können.

Bevorzugt gilt, dass alle erfassten Bilder im Rahmen einer Auswertung bzw. Analyse verwendet werden. Beispielsweise können alle erfassten Bilder zu Inspektionszwecken herangezogen werden. Da erfindungsgemäß vorgesehen ist, dass das Kamerasystem gezielt nur zu günstigen Zeitpunkten getriggert wird, werden schlechte, unbrauchbare Aufnahmen von vorneherein vermieden und es können alle Aufnahmen für eine Auswertung, etwa Inspektion, verwendet werden. Das Erfassen und die Speicherung von unbrauchbaren Bildern wird zuverlässig vermeiden, so dass sich das Verfahren auch durch eine besonders hohe Effizienz auszeichnet.

Eine weitere vorteilhafte Ausführungsform des Verfahrens zeichnet sich dadurch aus, dass eine Schwingungsmesseinrichtung vorgesehen ist, mittels derer von dem Kamerasystem ausgeführte Schwingungsbewegungen messtechnisch erfasst werden können. Ist die der Fall, gilt bevorzugt, dass die Ermittlung der wenigstens einen Schwingungsbewegung unter Nutzung von mit der Schwingungsmesseinrichtung gewonnenen Messdaten erfolgt.

Eine Schwingungsmesseinrichtung kann beispielsweise wenigstens einen Gyro-Sensor umfassen oder durch einen solchen gegeben sein. In diesem Falle wird bevorzugt eine Drehrate und/oder Drehgeschwindigkeit des Kamerasystems gemessen und bei der Ermittlung der Schwingungsbewegung berücksichtigt. Die Drehrate und/oder Drehgeschwindigkeit stellen geeignete, mit einem Gyro-Sensor gut erfassbare Schwingungsparameter dar, die im Rahmen des erfindungsgemäßen Verfahrens erfasst werden können, um Aufschluss über den momentanen Schwingungszustand des Kamerasystems zu erhalten.

Es ist einerseits möglich, dass im Rahmen des erfindungsgemäßen Verfahrens nur diejenigen Schwingungen genutzt werden, die das Kamerasystem aufgrund seiner Aufhängung über die Dämpfungseinrichtung und infolge des Antriebs bzw. der Bewegung des Fahrzeugs ohnehin ausführt. Man kann diese Schwingungsbewegungen auch als natürliche Schwingungsbewegungen bezeichnen. Für die Dämpfung der Eigenschwingung des Fahrzeugs sind heute zahlreiche verschiedene Dämpfer kommerziell verfügbar, die jeweils andere Charakteristiken im Dämpfungsverhalten aufweisen. Durch gezielte Auswahl der Dämpfer können bestimmte Schwingungsfrequenzen stärker als andere reduziert werden. Dadurch kann eine Auslegung hin zu einer günstigen Schwingungs-Amplitude, Frequenz und Orientierung erreicht werden.

Es ist aber auch möglich, Schwingungen zusätzlich einzubringen. So ist in Weiterbildung des erfindungsgemäßen Verfahrens eine Schwingungsanregungseinrichtung vorgesehen, mittels derer das Kamerasystem zusätzlich zur Schwingung angeregt wird. Die Schwingungsanregungseinrichtung kann motorisiert sein.

Für eine Anregung gibt es prinzipiell verschiedene Möglichkeiten. Das gedämpft aufgehängte Kamerasystem wird mit einer insbesondere leichten kontinuierlichen Schwingung, beispielsweise als Drehung um die Gierachse, zusätzlich angeregt, dies insbesondere motorisiert. Alternativ oder zusätzlich kann wenigstens ein Federelement als Schwingungsanregungseinrichtung oder Bestandteil einer solchen vorgesehen sein, dass eine Eigenschwingung in einem gewünschten Frequenzbereich einbringt und insbesondere verstärkt.

Eine Auslegung in Resonanz kann insbesondere über Elemente erreicht werden, die eine Eigenfrequenz im gewünschten Frequenzbereich besitzen. Eine schwache Anregung beispielsweise über Vibrationen des Fahrzeugs führt dann zu einer Verstärkung der Schwingung dieser Frequenz und damit einer dominanten Schwingungsbewegung.

Wenn eine zusätzliche Anregung vorgesehen ist, kann die Ermittlung der wenigstens einen Schwingungsbewegung des Kamerasystems auch dadurch erfolgen oder mit einschließen, dass von der Schwingungsanregung wenigstens eine resultierende Schwingungsbewegung abgeleitet und/oder abgeschätzt und/oder vorhergesagt wird.

Beispielsweise kann die Triggerung zu Zeitpunkten erfolgen, die in Abhängigkeit der zusätzlichen Schwingungsanregung, beispielsweise in Abhängigkeit einer Frequenz einer zusätzlichen Schwingungsanregung, gewählt bzw. bestimmt werden.

Wenn eine Anregung erfolgt, kann die Triggerung mit der Anregung synchronisiert werden.

Als besonders geeignet hat sich erwiesen, wenn im Rahmen des erfindungsgemäßen Verfahrens das Kamerasystem infolge der wenigstens einen Triggerung Bildaufnahmen mit einer Belichtungszeit im Bereich von 0,5 Millisekunden bis 15 Millisekunden, insbesondere 0,5 Millisekunden bis 5 Millisekunden, bevorzugt 0,5 Millisekunden bis 3 Millisekunden aufnimmt. Rein beispielhaft für eine Belichtungszeit, die sich als geeignet erwiesen hat, sei 1 Millisekunde genannt.

Es sei angemerkt, dass es beim aktiven Triggern der Bildaufnahme(n) zu einer zeitlichen Verschiebung des Aufnahmezeitpunktes kommen kann. Die Kamera oder Kameras des Kamerasystems würden dann keine konstante Bildwiederholrate mehr einhalten. Eine solche Verschiebung, beispielsweise auch um 100 Millisekunden, ist im Rahmen des erfindungsgemäßen Verfahrens problemlos tolerierbar. Eine Verarbeitung der Bilddaten kann beispielsweise über eine Bestimmung des genauen Aufnahmeorts erfolgen. Da die Fluggeschwindigkeit in der Praxis in der Regel nicht konstant ist, sind die Aufnahmen im Ort auch ohne das Verfahren nicht äquidistant so dass mit diesem Verfahren kein Nachteil entsteht.

Weiter bevorzugt gilt, dass mittels des Kamerasystems erhaltene Bildaufnahmen mit einem insbesondere automatisch erzeugten Zeitstempel versehen werden. Dies ermöglicht es insbesondere, dass im Rahmen einer nachgelagerten Auswertung der Aufnahmen diesen Punkte der Fahr-, insbesondere Flugtrajektorie des Fahrzeugs zugeordnet werden können. Diese Schritte der Ortsbestimmung der Aufnahmen sind heute bereits üblich und ändern sich durch den Einsatz des erfindungsgemäßen Verfahrens nicht.

Insbesondere für den Fall, dass die Dauer der Bildaufnahmen gering ist, z.B. eine oder einige Millisekunden beträgt, ist ausreichend Zeit im trägen mechanischen System während dieser Zeit von konstanter Bewegung auszugehen. Dies vereinfacht die Schätzung und Vorhersage der Schwingung, da nur geringe und kurzfristige lineare Bewegungen als Näherung der Berechnungen ausreichen. Ebenso ermöglicht das System bei weniger als 10 Bildern pro Sekunde ausreichend Zeit für Bewegungen in ungünstige Richtungen und Zeit um auf eine passende Schwingungsbewegung zu warten.

Das Fahrzeug kann sich beispielsweise mit einer Geschwindigkeit im Bereich von 10 km/h bis 60 km/h, insbesondere von 15 km/h bis 50 km/h, bevorzugt von 20 km/h bis 40 km/h bewegt.

Eine weitere Ausführungsform zeichnet sich dadurch aus, dass sich das Fahrzeug mit einer Geschwindigkeit bewegt oder mit einer maximalen Geschwindigkeit bewegt wird, die an die Amplitude wenigstens einer Schwingungsbewegung des Kamerasystems angepasst ist. Alternativ oder zusätzlich kann vorgesehen sein, dass der Objektabstand an die Amplitude wenigstens einer Schwingungsbewegung des Kamerasystems angepasst ist. Eine bestimmte Winkelgeschwindigkeit führt dazu, dass Objekte in einem Abstand eine scheinbare Bewegung erfahren, die dann ausgeglichen wird. Befindet sich ein interessantes Objekt doppelt so weit weg, ist die scheinbare Bewegung auch doppelt so groß. Für einen optimalen Einsatz wird daher zweckmäßiger Weise der ungefähre Abstand der zu inspizierenden Objekte zusammen mit der Fluggeschwindigkeit in die Berechnung mit einbezogen. Bevorzugt sind Geschwindigkeit und Objektabstand an die Amplitude wenigstens einer Schwingungsbewegung des Kamerasystems angepasst. Die Abstimmung bzw. Anpassung erfolgt beispielsweise über die Dimensionierung der Amplitude und Frequenz der Bewegung durch Bauteilauswahl für ein typisches Flugprofil mit mittlerem Objektabstand und mittlerer Fluggeschwindigkeit. Dies ermöglicht einen besonders guten Einsatz des erfindungsgemäßen Verfahrens.

Gegenstand der Erfindung ist auch ein System zur Durchführung des erfindungsgemäßen Verfahrens. Ein solches umfasst bevorzugt eine mit einem Kamerasystem verbundenen oder verbindbare Auswerte- und Triggereinrichtung, die zur Durchführung des erfindungsgemäßen Verfahrens ausgebildet und eingerichtet ist. Besonders bevorzugt gilt, dass die Auswerte- und Triggereinrichtung wenigstens einen programmierbaren Computer und/oder Mikrocontroller umfasst oder durch einen solchen gegeben ist.

Weiterhin kann eine mit der Auswerte- und Triggereinrichtung verbundene oder verbindbare Schwingungsmesseinrichtung vorgesehen sein, mittels derer von einem Kamerasystem ausgeführte Schwingungsbewegungen messtechnisch erfasst werden können. Die Schwingungsmesseinrichtung kann wenigstens einen Gyro-Sensor umfassen oder durch einen solchen gegeben sein.

Im Rahmen des erfindungsgemäßen Verfahrens genutzte Elektronik kann sich - neben dem Kamerasystem - auf einen Sensor, etwa Gyro-Sensor, zur Schwingungserfassung und einen Mikrokontroller insbesondere zur Auswertung der Drehrichtung beschränken. Die Analyse der Schwingungen ist beispielsweise in einem kleinen Mikrokontroller möglich.

Das erfindungsgemäße System umfasst in Weiterbildung ferner eine bevorzugt motorisierte Schwingungsanregungseinrichtung, mittels derer ein Kamerasystem, das über eine Dämpfungseinrichtung, welche bevorzugt zur passiven Dämpfung von Schwingungsbewegungen des Kamerasystems ausgebildet ist, an oder in einem Fahrzeug gehalten ist, zur Schwingung angeregt werden kann. So wird eine zusätzliche aktive Schwingungsanregung, insbesondere in einer auf das Flugprofil abgestimmten Frequenz, Amplitude und/oder Orientierung, möglich.

Ein Kamerasystem und/oder eine Dämpfungseinrichtung für eine solche können ebenfalls Bestandteile eines erfindungsgemäßen Systems sein. Sie können aber auch dazu separate Komponenten bilden, die mit dem System verbindbar bzw. verbunden sind. Dies beispielsweise, wenn das erfindungsgemäße System nachgerüstet wird und bereits ein Kamerasystem und/oder eine Dämpfungseinrichtung an bzw. in einem Fahrzeug vorhanden sind.

Ein weiterer Gegenstand der Erfindung ist ein Fahrzeug umfassend ein erfindungsgemäßes System. In oder an dem Fahrzeug kann ein Kamerasystem über eine Dämpfungseinrichtung, welche bevorzugt zur passiven Dämpfung von Schwingungsbewegungen des Kamerasystems ausgebildet ist, gehalten sein. Bevorzugt ist das erfindungsgemäße System dann mit dem Kamerasystem verbunden.

Die Erfindung betrifft auch ein Computerprogrammprodukt, umfassend Befehle, die bewirken, dass das erfindungsgemäße System die Schritte des erfindungsgemäßen Verfahrens ausführt. Es kann sich auch um ein Computerprogrammprodukt handeln, dass Befehle umfasst, die bei der Ausführung des Programms durch einen Computer diesen veranlassen, das erfindungsgemäße Verfahren auszuführen.

Schließlich ist Gegenstand der Erfindung ein computerlesbares Medium, auf dem das erfindungsgemäße Computerprogrammprodukt gespeichert ist.

Weitere Merkmale und Vorteile der vorliegenden Erfindung werden anhand der nachfolgenden Beschreibung einer Ausführungsform der Erfindung unter Bezugnahme auf die beiliegende Zeichnung deutlich. Darin ist
Figur 1 eine rein schematische Darstellung eines Hubschraubers mit einem darin angeordneten Kamerasystem mit dem während eines Fluges Aufnahmen von Objekten auf dem Boden gemacht werden;
Figur 2 eine rein schematische Darstellung einer Sinusschwingung; und
Figur 3 die Schritte eines Ausführungsbeispiels des erfindungsgemäßen Verfahrens.

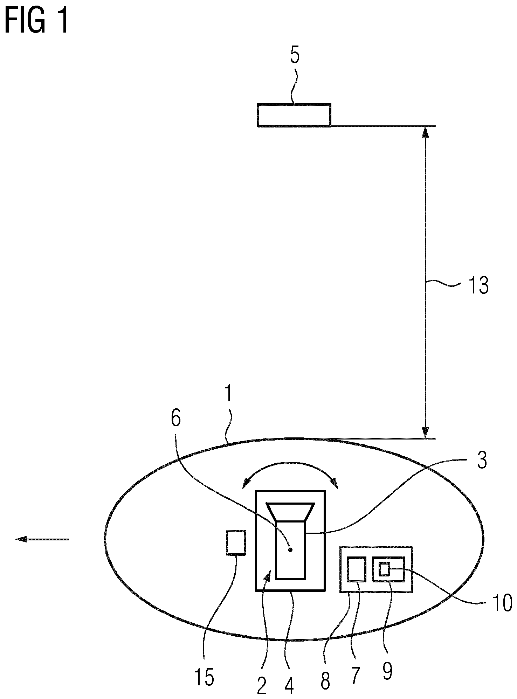

Die schematische Figur 1 zeigt in stark vereinfachter Darstellung ein vorliegend durch einen Hubschrauber 1 gegebenes Fahrzeug in Draufsicht. Der Hubschrauber 1 befindet sich im Flug, führt konkret eine Vorwärtsbewegung aus, deren Richtung in Figur 1 durch einen Pfeil angedeutet ist. Die Geschwindigkeit des Hubschraubers 1 beträgt 30 km/h, wobei dies beispielhaft zu verstehen ist.

In dem Hubschrauber 1 ist ein Kamerasystem 2 angeordnet, welches bei dem Ausführungsbeispiel eine Kamera 3 umfasst bzw. durch eine solche gegeben ist. Die Kamera 3 ist in der Lage eine Sequenz an Einzelbildern anzufertigen. Das Kamerasystem ist über eine Dämpfungseinrichtung 4, welche bevorzugt zur passiven Dämpfung von Schwingungsbewegungen des Kamerasystems 2 ausgebildet ist, in dem Hubschrauber 1 gehalten. Die Dämpfungseinrichtung 4 umfasst zwei nicht weiter dargestellte, übereinander und beabstandet voneinander angeordnete Montageplatten, die über Stahlseilschleifen und/oder Gummipuffer dämpfend miteinander gekoppelt sind. Auf der oberen der beiden Platten ist das Kamerasystem 2 montiert und die untere ist in dem Hubschrauber 1 gehalten, konkret am Hubschrauber 1 fixiert. Es sei betont, dass dies rein beispielhaft zu verstehen ist und auch anders gestaltete Dämpfungseinrichtungen 4 zum Einsatz kommen können.

Mit dem Kamerasystem 2 sind während des Fluges des Hubschraubers 1 Aufnahmen von am Boden befindlichen, bevorzugt ruhenden Objekten 5 zu machen. Bei dem dargestellten Ausführungsbeispiel dient der Flug der Inspektion einer Hochspannungs-Freileitungs-Infrastruktur, von der in der Figur 1 nur beispielshaft eine Hochspannungsleitung 5 rein schematisch durch ein Blockelement angedeutet ist.

Es besteht der Wunsch einer möglichst schnellen Befliegung und damit möglichst geringen Kosten. Dies steht bei konventionellen Verfahren im Konflikt mit dem Wunsch nach einer besonders hohen Auflösung und einer ausreichenden bzw. erforderlichen Lichtmenge. Die Auflösung unterliegt Einschränkungen durch Bewegungsunschärfen aufgrund der Tatsache, dass sich der Hubschrauber 1 und damit das in dem Hubschrauber 1 angeordnete Kamerasystem 2 während der Bilderfassung relativ zu aufgezeichneten Objekten 5 bewegt.

Mit dem erfindungsgemäßen Verfahren zur Erfassung von Bildaufnahmen von einem oder mehreren Objekten 5 mittels eines in oder an einem Fahrzeug, insbesondere Luftfahrzeug 1, angeordneten Kamerasystems 2, von dem im Folgenden ein Ausführungsbeispiel beschrieben wird, kann diese Problematik überwunden werden.

Während des Fluges führt das dämpfend gelagerte Kamerasystem 2 infolge des Antriebs und insbesondere der Fortbewegung des Hubschraubers 1 Schwingungsbewegungen aus. Dies u.a. infolge der Rotorbewegung des Hubschraubers 1. Bei dem dargestellten Beispiel führt das Kamerasystem 2 u.a. eine Schwingungsbewegung u.a. um die Gierachse 6 des Hubschraubers 1 aus. Diese steht senkrecht zur Zeichenebene der Figur 1 und zur durch den Pfeil dargestellten Vorwärtsbewegungsrichtung des Hubschraubers 1. Bei dieser Schwingungsbewegung handelt es sich um eine Drehschwingung. Das Kamerasystem 2 dreht sich um die Gierachse 6 schwingend vor und zurück. In der Figur 1 ist dies schematisch durch einen Doppelpfeil angedeutet.

Im Rahmen des erfindungsgemäßen Verfahrens wird an wenigstens einem Zeitpunkt wenigstens eine Schwingungsbewegung des Kamerasystems 2 relativ zu dem Fahrzeug 1 direkt oder indirekt ermittelt (Schritt S1). Dass eine Schwingungsbewegung ermittelt wird, bedeutet bei dem vorliegenden Beispiel, dass wenigstens ein zu einer Schwingungsbewegung des Kamerasystems gehöriger oder eine Schwingungsbewegung des Kamerasystems repräsentierender bzw. charakterisierender Parameter direkt oder indirekt ermittelt wird. Bei dem dargestellten Ausführungsbeispiel kommt hierfür eine Schwingungsmesseinrichtung 7 zum Einsatz, mittels derer von dem Kamerasystem 2 ausgeführte Schwingungsbewegungen messtechnisch erfasst werden können. Die Schwingungsmesseinrichtung 7 misst insbesondere direkt die Schwingungen des Kamerasystems 2 und ist bzw. wird hierzu an dem Kamerasystem 2, insbesondere innerhalb der Dämpfungseinrichtung 4, montiert. In der stark vereinfachten Figur 1 ist die an dem Kamerasystem 2 befestigte Schwingungsmesseinrichtung 7 allein aus Gründen der besseren Übersichtlichkeit neben dem Kamerasystem 2 gezeigt.

Die Ermittlung der wenigstens einen Schwingungsbewegung (Schritt S1) erfolgt unter Nutzung von mit der Schwingungsmesseinrichtung 7 gewonnenen Messdaten. Diese umfasst einen Gyro-Sensor oder ist durch einen solchen gegeben. Mittels des Gyro-Sensors 7 kann die Drehschwingungsbewegung des Kamerasystems 2 um die Gierachse 6 vermessen werden. Hierfür ist der Gyro-Sensor 7 entsprechend ausgebildet und angeordnet. Ein Beispiel für einen solchen Sensor 7 ist ein Analog Devices ADIS 16448. Der Gyro-Sensor 7 ist Bestandteil eines Ausführungsbeispiels eines erfindungsgemäßen Systems 8 zur Durchführung des erfindungsgemäßen Verfahrens. Das System 8 umfasst neben dem Gyro-Sensor 7 noch eine Auswerte- und Triggereinrichtung 9, die einen Mikrokontroller 10 aufweist oder durch einen solchen gegeben ist. Mittels des Mikrokontrollers 10 kann eine Analyse der Drehsignale insbesondere zur Auswertung der Drehrichtung erfolgen. Der Mikrokontroller 10 besitzt bevorzugt eine Steuermöglichkeit, um eine Bildaufnahme des Kamerasystems 2 auszulösen, beispielsweise über eine gesonderte Triggerleitung zum Kamerasystem 2.

Unter Nutzung des Gyro-Sensors 7 und der Auswerte- und Triggereinrichtung 9 wird in erster Näherung eine oder mehrere Sinusschwingungen an die gemessenen Daten der Vergangenheit von beispielsweise der letzten Sekunde gefittet. Dieser Fit ermittelt beispielsweise Amplitude, Frequenz und Phasenlage der Schwingungsbewegung unter der Modellannahme von Sinusbewegungen. Aus der gemessenen Fluggeschwindigkeit, dem Abstand der Objekte 5 sowie der Kameraeinstellung (Brennweite, Blickwinkel, Zielauflösung) wird eine gewünschte Drehbewegung für eine günstigen Auslösezeitpunkt errechnet. In der Vorhersage der ermittelten Sinusschwingung kann diese Winkelbewegung dann ermittelt und für den vorhergesagten Zeitpunkt ein Triggersignal für das Kamerasystem 2 erzeugt werden.

Es erfolgt ferner wenigstens eine Triggerung, mit anderen Worten wenigstens ein Auslösen des Kamerasystems 2 in Abhängigkeit der an dem wenigstens einen Zeitpunkt ermittelten wenigstens einen Schwingungsbewegung (Schritt S2).

Bei dem hier beschriebenen Ausführungsbeispiel wird nicht nur an einem sondern an mehreren hintereinanderliegenden Zeitpunkten wenigstens eine Schwingungsbewegung des Kamerasystems 2 relativ zu dem Fahrzeug 1 direkt oder indirekt ermittelt, und es erfolgt jeweils eine Triggerung in Abhängigkeit der wenigstens einen ermittelten Schwingungsbewegung. Die Sensorik arbeitet dazu üblicherweise kontinuierlich, beispielsweise mit 1kHz Abtastrate, und hält die Messwerte beispielsweise der letzten Sekunde in einem lokalen Speicher. Aus diesen Messwerten erfolgt dann die Verarbeitung und Vorhersage. Eine solche Verarbeitung kann beispielsweise jeweils beim Eintreffen neuer Messwerte erneut günstige Zeitpunkte berechnen, oder alternativ bei Erreichen des Zeitpunkts einer nächsten möglichen Aufnahme zur Einhaltung der mittleren Bildwiederholrate einmalig die Berechnung durchführen.

Die Triggerungen werden mittels der Auswerte- und Triggereinrichtung 9, die an entsprechenden Zeitpunkten ein Triggersignal an das Kamerasystem 2 ausgibt, bewirkt, so dass dieses jeweils zu einer Aufnahme eines Bildes veranlasst wird. Die Auswerte- und Triggereinrichtung 9 ist hierfür mit dem Kamerasystem 2 verbunden. Die Messung und Triggerung sind häufig jeweils mit einer kleinen und bekannten Verzögerung verbunden (z.B. 1 msec), die bei der Berechnung und Vorhersage zweckmäßiger Weise berücksichtigt wird.

Die Belichtungszeit je getriggerter Aufnahme beträgt vorliegend 1 Millisekunde, wobei dies beispielhaft zu verstehen ist.

Die jeweilige Triggerung des Kamerasystems 2 erfolgt, wenn die wenigstens eine ermittelte Schwingungsbewegung eine Bewegung, hier die Vorwärtsbewegung, des Hubschraubers 2 relativ zu wenigsten einem bevorzugt ruhenden Objekt 5, von dem eine oder mehrere Aufnahmen zu machen sind, zumindest teilweise kompensiert.

Insbesondere für den Fall, dass man sich eine Schwingung als Sinusschwingung oder sinusartige Schwingung vorstellt, wird deutlich, dass Zeitpunkte vorliegen, in denen sich das Kamerasystem 2 mit der Objektbewegung bewegt, im Falle einer Drehschwingung mit der Objektbewegung verdreht, und ein zu betrachtendes bzw. aufzuzeichnendes Objekt 5 verfolgt, und Zeitpunkte, in denen das Kamerasystem 2 die scheinbare Bewegung vor dem Objektiv verstärkt. Es liegen somit Zeitpunkte vor, an denen ein negativer Einfluss des Antriebs bzw. der Bewegung des Fahrzeugs 1 auf die Bildqualität durch die Schwingung des Kamerasystems 2 reduziert bzw. minimiert, im optimalen Falle sogar vollständig aufgehoben wird. Die Schwingungen können bzw. der Zeitpunkt der Schwingungen kann ausgenutzt werden, um im richtigen Zeitpunkt der Objektverfolgung eine Bildaufnahme (Auslöse- bzw. Triggerzeitpunkt) durchzuführen. Beispielsweise kann eine momentane Schwingungsbewegung, die einer Vorwärtsbewegung des Fahrzeugs 1 gerade entgegengerichtet ist, Letztere kompensieren.

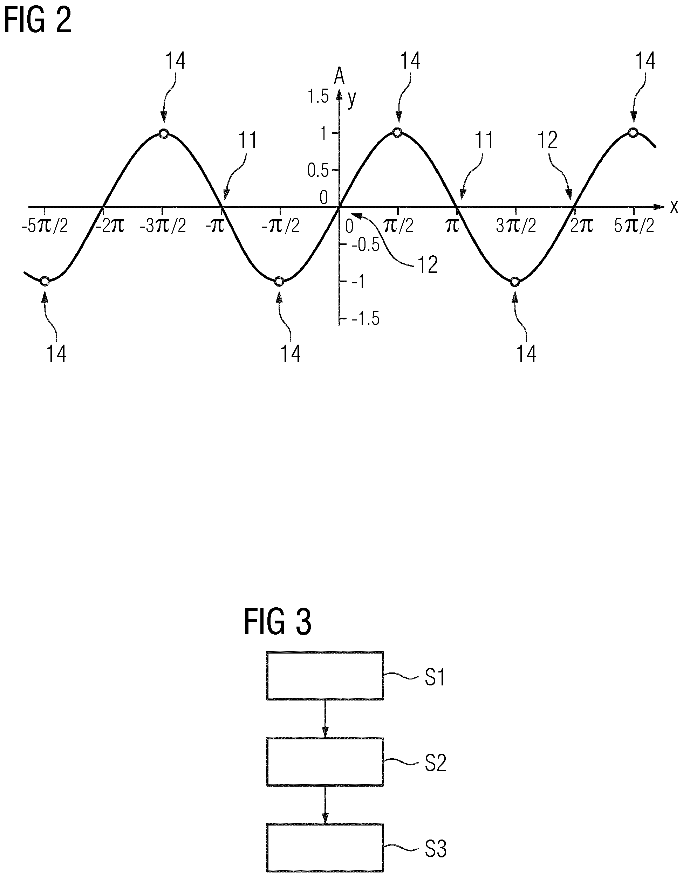

In der Figur 2 ist schematisch eine Sinusschwingung dargestellt, bei der es sich z.B. um die Drehschwingung des Kamerasystems 2 um die Gierachse 6 des Hubschraubers 1 handeln kann bzw. eine Fitfunktion, die an mehrere erfasste Messwerte gefittet wird bzw. wurde. Der Buchstabe A an der y-Achse in Figur 2 steht für die Auslenkung, die in der rein schematischen Figur einheitenlos aufgetragen ist.

Ein unter diesem Aspekt günstiger Zeitpunkt für die Triggerung, wenn aufgrund der Schwingung gerade eine Objektverfolgung erfolgt, würde beispielsweise bei -π vorliegen. Hier ist die Richtung der Drehschwingung der Vorwärtsbewegung maximal entgegengerichtet (vgl. die rechte Pfeilspitze des Doppelpfeils aus Figur 1 und den Pfeil für die Vorwärtsbewegung), das Kamerasystem 2 verfolgt also gerade aufzunehmende Objekte 5 am Boden, und die Drehschwingung hat die maximale Winkelgeschwindigkeit. Der günstige Moment wiederholt sich jeweils nach 2π, also bei +π, 3π, 5π usw. Die günstigen Zeitpunkte sind in der Figur 2 mit dem Bezugszeichen 11 versehen und entsprechen günstigen bzw. optimalen Zeitpunkten für die größtmögliche, mit anderen Worten maximale Vorwärtsgeschwindigkeit, bei der das System 8 besonders erfolgreich arbeiten kann. Sie sind durch Punkte gegeben, an denen die Steigung des Sinus maximal ist.

Bei -2π, 0, 2π usw. hingegen liegt ein für eine Vorwärtsbewegung mit maximaler Geschwindigkeit besonders ungünstiger Zeitpunkt vor. Hier ist die Drehgeschwindigkeit wieder maximal, aber die Drehrichtung zeigt in Richtung der Vorwärtsbewegung. Der negative Einfluss wird hier mit anderen Worte durch die Schwingung noch (maximal) verstärkt. Diese Zeitpunkte sind in der Figur 2 mit dem Bezugszeichen 12 versehen und sind bzw. wären besonders ungünstige Auslösezeitpunkte.

Bei idealem Stillstand im Schwebeflug ohne Vorwärtsbewegung sind die Zeitpunkte 14 im Umkehrpunkt der Sinusschwingung als günstige Auslösezeitpunkte auszuwählen. Das Kamerasystem 2 hat dann für einen kurzen Zeitpunkt eine konstante Auslenkung und keine Bewegung.

Für langsame Flugbewegungen (unterhalb der maximalen Systemgeschwindigkeit) ist ein Auslösezeitpunkt zwischen den Punkten 14 und 11 zu wählen. Die genaue Position hängt dabei von der momentanen Vorwärtsgeschwindigkeit ab. Aufgrund der Vermessung der Drehschwingung des Kamerasystems 2 ist bekannt, wann die günstigen Zeitpunkte vorliegen, in denen die natürlichen Drehschwingung des dämpfend aufgehängten Kamerasystems 2 die Vorwärtsbewegung des Hubschraubers 1 kompensieren und somit die Relativbewegung zwischen dem Kamerasystem 2 und den am Boden befindlichen Objekten 5 reduzieren bzw. vollständig aufheben, und es kann gezielt jeweils an diesen eine Triggerung des Kamerasystems 2, also Bildaufnahme erfolgen.

Aufgrund der erfindungsgemäßen Kompensation der Vorwärtsbewegung durch Nutzung der natürlichen Schwingung an günstigen Zeitpunkten können im Ergebnis Bilder besserer Qualität, insbesondere höherer Auflösung und geringerer Bewegungsunschärfe, erhalten werden. Die Triggerung erfolgt mit anderen Worte jeweils, wenn die ermittelte Schwingungsbewegung die Vorwärtsbewegung des Hubschraubers 1 derart zumindest teilweise kompensiert, dass das resultierende Bild oder die resultierenden Bilder sich durch eine höhere Schärfe auszeichnen, als es der Fall wäre, wenn das Kamerasystem 2 keine Schwingungsbewegung relativ zu dem Fahrzeug ausgeführt hätte. Die bessere Auflösung ist dabei erhältlich, ohne dass die Geschwindigkeit des Hubschraubers 1 zu irgendeinem Zeitpunkt reduziert werden müsste. Sie kann kontinuierlich im Bereich von 30 km/h bleiben. Mehrkosten werden daher zuverlässig vermieden.

Ausgehend von einer Geschwindigkeit des Hubschraubers 1 von 30 km/h kann man folgende Abschätzung zur erforderlichen Auslenkung treffen. Bei dieser Fluggeschwindigkeit bewegen sich Objekte 5 mit 8,3 mm/msec relativ zum Hubschrauber 1 bzw. umgekehrt. Wenn man von einem Objektabstand 13 (vgl. Figur 1) von 50 Metern ausgeht, was insbesondere bei Flugaufnahmen ein nicht unüblicher Wert ist, wäre eine Schwenkung um 0,01 Grad zum Erzielen einer geeigneten Kompensation ausreichend. Das Kamerasystem 2 müsste sich jedoch nicht kontinuierlich mit 10 Grad pro Sekunde drehen, sondern könnte beispielsweise 10 Schwingungen pro Sekunde durchführen. Dann würden sich zehn günstige Triggerzeitpunkte 11 pro Sekunde ergeben, insbesondere alle 100 Millisekunden einer. Die gesamte erforderliche Auslenkung läge dann bei nur +-0,2 Grad im Maximum. Eine solche Verdrehung ist über übliche Dämpfungseinrichtungen 4 gut zu erreichen.

Das Kamerasystem 2 kann neben der Drehschwingungsbewegung um die Gierachse 6 natürlich noch weitere Schwingungen, z.B. translatorische Schwingungen und/oder Drehschwingungen um andere Achsen, ausführen. Solche können ebenfalls auf die erfindungsgemäße Weise genutzt werden, etwa für einen Steig- oder Sinkflug oder für Kameras 3 bzw. Kamerasysteme, die in anderen Blickwinkeln im Bezugssystem des Fahrzeugs, etwa Helikopters 1, montiert sind. Hierbei reicht e es prinzipiell aus, auf eine Schwingungsbewegung um eine Achse (rotatorisch) bzw. entlang einer Achse (translatorisch) abzustellen, z.B. die Drehschwingung um die Achse 6.

Noch während des Fluges oder auch nach der eigentlichen Bilderfassung kann in an sich bekannter Weise eine Auswertung des erfassten Bildmaterials durchgeführt werden (Schritt S3). Bei dem dargestellten Ausführungsbeispiel dient diese der Inspektion der Hochspannungs-Freileitungs-Infrastruktur mit den Leitungen 5. Da durch die erfindungsgemäße Vorgehensweise und die gezielte Triggerung generell Bilder hoher Qualität erhalten werden, können dabei alle Aufnahmen herangezogen werden. Ein Aussortieren und Verwerfen unbrauchbarer Aufnahmen ist nicht erforderlich und der Speicherplatz im Fluggerät wird optimal ausgenutzt.

Es sei angemerkt, dass die mittels des Kamerasystems 2 erfassten Bildaufnahmen mit einem insbesondere automatisch erzeugten Zeitstempel versehen werden bzw. wurden. So können diese im Nachgang, etwa im Rahmen einer Auswertung, Punkten der Flugtrajektorie zugeordnet werden.

Eine Auswertung der Bilder wie gemäß Schritt S3 vorgesehen - kann, muss jedoch nicht Bestandteil des erfindungsgemäßen Verfahrens sein.

Die vorstehend beschriebenen Schritte, ggf. einschließlich des Schrittes S3, können mittels einer erfindungsgemäßen Software ausgeführt werden, die auf dem System 8 gespeichert sein kann.

Im Rahmen des erfindungsgemäßen Verfahrens können einerseits nur die natürlichen, aufgrund der konventionellen dämpfenden Aufhängung und des Antriebs bzw. der Bewegung des Fahrzeugs 1 ohnehin auftretenden Schwingungen gezielt zum Erhalt einer besseren Bildqualität genutzt werden. Es ist aber auch möglich, zusätzlich Schwingungen einzubringen. Hierfür kann eine Schwingungsanregungseinrichtung 15 vorgesehen sein, mittels derer das Kamerasystem 2 zusätzlich zur Schwingung angeregt werden kann bzw. angeregt wird. Hier gibt es prinzipiell verschiedene Möglichkeiten. So kann das gedämpft aufgehängte Kamerasystem 2 z.B. mit einer insbesondere leichten, kontinuierlichen Schwingung, beispielsweise als Drehung um die Gierachse 6, zusätzlich angeregt werden. Hierfür kann die Schwingungsanregungseinrichtung 15 entsprechend ausgebildet und angeordnet sein. Sie kann insbesondere wenigstens einen Motor umfassen, so dass die zusätzliche aktive Schwingungsanregung motorisiert erfolgen kann. Alternativ oder zusätzlich kann auch wenigstens ein Federelement als Schwingungsanregungseinrichtung 15 oder Bestandteil einer solchen vorgesehen sein, das eine Eigenschwingung in einem gewünschten Frequenzbereich einbringt und insbesondere verstärkt.

Wenn eine zusätzliche Anregung vorgesehen ist, kann die Ermittlung der wenigstens einen Schwingungsbewegung (Schritt S1) des Kamerasystems 2 auch dadurch erfolgen oder mit einschließen, dass von der Schwingungsanregung wenigstens eine resultierende Schwingungsbewegung abgeleitet und/oder abgeschätzt und/oder vorhergesagt wird. Dann kann auch darauf verzichtet werden, eine zugehörige messtechnische Erfassung vorzusehen. Ein Schwingungsmesseinrichtung 7, etwa ein Gyro-Sensor, ist dann nicht erforderlich und ein erfindungsgemäßes System 8 kann ohne einen solchen auskommen.

Für einen besonders guten Einsatz des erfindungsgemäßen Verfahrens wird die Amplitude der Schwingung an die Geschwindigkeit des Fahrzeugs 1 und den Objektabstand 13 angepasst. Bei dem dargestellten Ausführungsbeispiel kann de Amplitude der Drehschwingung des Kamerasystems 2 um die Gierachse 6 entsprechend angepasst werden. Die mittlere Fluggeschwindigkeit kann beispielsweise über im Fahrzeug 1 vorhandene GPS-Sensoren gemessen oder auch im Arbeitsbereich als bekannt angenommen werden. Durch die Fokussierung der Kamera 3 bzw. Kameras 3 des Kamerasystems 2 kann der Arbeitsabstand festgelegt sein, beispielsweise auf 50 Meter. Darüber hinaus kann auch eine Echtzeit-Erfassung des Arbeitsabstands über LIDAR Scanner erfolgen, der in manchen Inspektionen sowieso vorhanden ist und ein 3D Modell aufzeichnet und damit den Arbeitsabstand erfasst. Ebenso denkbar ist eine Bestimmung des aktuellen Abstands aus bekannten GPS Koordinaten der zu inspizierenden Objekte und der aktuellen Position des Fahrzeugs, etwa Hubschraubers 1.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Verfahren zur Erfassung von Bildaufnahmen von einem oder mehreren Objekten (5) mittels eines in oder an einem Fahrzeug (1), insbesondere Luftfahrzeug, angeordneten Kamerasystems (2), wobei das Kamerasystem (2) über eine Dämpfungseinrichtung (4), welche bevorzugt zur passiven Dämpfung von Schwingungsbewegungen des Kamerasystems (2) ausgebildet ist, an dem Fahrzeug (2) gehalten ist, und wobei das Kamerasystem (2) infolge des Antriebs und insbesondere der Fortbewegung des Fahrzeugs Schwingungsbewegungen ausführt, bei dem
- an wenigstens einem Zeitpunkt wenigstens eine Schwingungsbewegung des Kamerasystems (2) relativ zu dem Fahrzeug (1) direkt oder indirekt ermittelt wird (S1), und
- wenigstens eine Triggerung des Kamerasystems (2) in Abhängigkeit der an dem wenigstens einen Zeitpunkt ermittelten wenigstens einen Schwingungsbewegung erfolgt (S2).

2. Verfahren nach Anspruch 1,
**dadurch gekennzeichnet, dass**
an mehreren hintereinanderliegenden Zeitpunkten wenigstens eine Schwingungsbewegung des Kamerasystems (2) relativ zu dem Fahrzeug (1) direkt oder indirekt ermittelt wird, insbesondere, wobei mehrere Triggerungen des Kamerasystems (2) in Abhängigkeit der an den mehreren hintereinanderliegenden Zeitpunkten ermittelten wenigstens einen Schwingungsbewegung erfolgt.

3. Verfahren nach Anspruch 1 oder 2,
**dadurch gekennzeichnet, dass**
die oder wenigstens eine Triggerung des Kamerasystems (2) erfolgt, wenn die wenigstens eine ermittelte Schwingungsbewegung eine Bewegung, insbesondere Vorwärtsbewegung, des Fahrzeugs (1) relativ zu wenigsten einem bevorzugt ruhenden Objekt, von dem eine oder mehrere Aufnahmen zu machen sind, zumindest teilweise kompensiert.

4. Verfahren nach einem der vorhergehenden Ansprüche,
**dadurch gekennzeichnet, dass**
die oder wenigstens eine Triggerung des Kamerasystems (2) erfolgt, wenn bezüglich zumindest eines Freiheitsgrades der wenigstens einen Schwingungsbewegung des Kamerasystems (2) gilt, dass sich die Richtung der Schwingungsbewegung umkehrt, bevorzugt, wobei das Kamerasystem (2) in einem Luftfahrzeug (1) angeordnet ist und sich das Luftfahrzeug (1) zu dem oder dem jeweiligen Triggerzeitpunkt des Kamerasystems (2) im Schwebeflug befindet.

5. Verfahren nach einem der vorhergehenden Ansprüche,
**dadurch gekennzeichnet, dass**
dass an mehreren hintereinanderliegenden Zeitpunkten wenigstens eine Schwingungsbewegung des Kamerasystems (2) relativ zu dem Fahrzeug (1) direkt oder indirekt ermittelt und eine zugehörige Fitfunktion bestimmt wird, bevorzugt, wobei wenigstens eine Triggerung des Kamerasystems (2) unter Berücksichtigung der bestimmten Fitfunktion erfolgt.

6. Verfahren nach einem der vorhergehenden Ansprüche,
**dadurch gekennzeichnet, dass**
wenigstens eine optimale Schwingungsbewegung unter Berücksichtigung einer gemessenen oder vorgegebenen Fluggeschwindigkeit und/oder eines gemessenen oder vorgegebenen Objektabstandes und/oder wenigstens einer Kameraeinstellung, bevorzugt der Brennweite und/oder dem Blickwinkel und/oder der Zielauflösung, bestimmt wird, insbesondere, wobei geprüft wird, ob oder wann die für einen oder mehrere Zeitpunkte ermittelte wenigstens eine Schwingungsbewegung des Kamerasystems (2) relativ zu dem Fahrzeug (1) mit der optimalen Schwingungsbewegung zumindest in etwa übereinstimmt.

7. Verfahren nach einem der vorhergehenden Ansprüche,
**dadurch gekennzeichnet, dass**
unter Durchführung des Verfahrens Bilder einer Hochspannungs-Freileitungs-Infrastruktur erfasst werden, insbesondere Bilder, die zur Inspektion der Hochspannungs-Freileitungs-Infrastruktur herangezogen werden können, und/oder, dass es sich bei dem Fahrzeug (1), in dem das Kamerasystem angeordnet ist, um einen Hubschrauber oder ein Flugzeug oder eine Drohne handelt.

8. Verfahren nach einem der vorhergehenden Ansprüche,
**dadurch gekennzeichnet, dass**
eine Schwingungsmesseinrichtung (7) vorgesehen ist, mittels derer von dem Kamerasystem (2) ausgeführte Schwingungsbewegungen messtechnisch erfasst werden können, bevorzugt, wobei die Ermittlung der wenigstens einen Schwingungsbewegung unter Nutzung von mit der Schwingungsmesseinrichtung (7) gewonnenen Messdaten erfolgt, und/oder die Schwingungsmesseinrichtung (7) wenigstens einen Gyro-Sensor umfasst oder durch einen solchen gegeben ist, insbesondere, wobei eine Drehrate und/oder Drehgeschwindigkeit des Kamerasystems (2) gemessen und bei der Ermittlung der Schwingungsbewegung berücksichtigt wird.

9. Verfahren nach einem der vorhergehenden Ansprüche,
**dadurch gekennzeichnet, dass**
eine insbesondere motorisierte Schwingungsanregungseinrichtung (15) vorgesehen ist, mittels derer das Kamerasystem (2) zusätzlich zur Schwingung angeregt wird, bevorzugt, wobei die Ermittlung der wenigstens einen Schwingungsbewegung des Kamerasystems (2) dadurch erfolgt oder miteinschließt, dass von der Schwingungsanregung wenigstens eine resultierende Schwingungsbewegung abgeleitet und/oder abgeschätzt und/oder vorhergesagt wird.

10. Verfahren nach einem der vorhergehenden Ansprüche,
**dadurch gekennzeichnet, dass**
dass das Kamerasystem (2) infolge der wenigstens einen Triggerung Bildaufnahmen mit einer Belichtungszeit im Bereich von 0,5 Millisekunden bis 15 Millisekunden, insbesondere 0,5 Millisekunden bis 5 Millisekunden, bevorzugt 0,5 Millisekunden bis 3 Millisekunden aufnimmt, und/oder dass mittels des Kamerasystems (2) erhaltene Bildaufnahmen mit einem insbesondere automatisch erzeugten Zeitstempel versehen werden.

11. Verfahren nach einem der vorhergehenden Ansprüche,
**dadurch gekennzeichnet, dass**
sich das Fahrzeug (1) mit einer Geschwindigkeit im Bereich von 10 km/h bis 60 km/h, insbesondere von 15 km/h bis 50 km/h, bevorzugt von 20 km/h bis 40 km/h bewegt, und/oder, dass sich das Fahrzeug (1) mit einer Geschwindigkeit bewegt oder mit einer maximalen Geschwindigkeit bewegt wird, die an die Amplitude wenigstens einer Schwingungsbewegung des Kamerasystems (2) angepasst ist.

12. System (8) zur Durchführung des Verfahrens nach einem der vorhergehenden Ansprüche, umfassend eine mit einem Kamerasystem (2) verbundenen oder verbindbare Auswerte- und Triggereinrichtung (9), die zur Durchführung des Verfahrens nach einem der vorhergehenden Ansprüche ausgebildet und eingerichtet ist, bevorzugt, wobei die Auswerte- und Triggereinrichtung (9) wenigstens einen programmierbaren Computer und/oder Mikrokontroller (10) umfasst oder durch einen solchen gegeben ist.

13. System (8) nach Anspruch 12,
**dadurch gekennzeichnet, dass**
eine mit der Auswerte- und Triggereinrichtung (9) verbundene oder verbindbare Schwingungsmesseinrichtung (7) vorgesehen ist, mittels derer von einem Kamerasystem (2) ausgeführte Schwingungsbewegungen messtechnisch erfasst werden können, insbesondere, wobei die Schwingungsmesseinrichtung (7) wenigstens einen Gyro-Sensor umfasst oder durch einen solchen gegeben ist.

14. System (8) nach Anspruch 12 oder 13,
**dadurch gekennzeichnet, dass**
eine bevorzugt motorisierte Schwingungsanregungseinrichtung (15) vorgesehen ist, mittels derer ein Kamerasystem (2), das über eine Dämpfungseinrichtung (4), welche bevorzugt zur passiven Dämpfung von Schwingungsbewegungen des Kamerasystems (2) ausgebildet ist, an oder in einem Fahrzeug (1) gehalten ist, zur Schwingung angeregt werden kann.

15. Fahrzeug (1) umfassend ein System (8) nach einem der Ansprüche 12 bis 14, insbesondere, wobei in oder an dem Fahrzeug (1) ein Kamerasystem (2) über eine Dämpfungseinrichtung (4), welche bevorzugt zur passiven Dämpfung von Schwingungsbewegungen des Kamerasystems (2) ausgebildet ist, gehalten ist, bevorzugt, wobei das System (8) mit dem Kamerasystem (2) verbunden ist.

16. Computerprogrammprodukt, umfassend Befehle, die bewirken, dass ein Computer oder das System (8) nach einem der Ansprüche 12 bis 14 die Verfahrensschritte nach einem der Ansprüche 1 bis 11 ausführt.

17. Computerlesbares Medium, auf dem das Computerprogrammprodukt nach Anspruch 16 gespeichert ist.
